(19) **Europäisches Patentamt**

**European Patent Office**

**Office européen des brevets**

(11) **EP 1 634 726 A1**

(12) **EUROPEAN PATENT APPLICATION**

(43) Date of publication:
15.03.2006 Bulletin 2006/11

(51) Int Cl.:
*B60C 1/00* (2006.01)　　　　*C08L 9/06* (2006.01)
*C08L 21/00* (2006.01)

(21) Application number: 05107858.2

(22) Date of filing: 26.08.2005

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **10.09.2004 US 609136 P**

(71) Applicant: **THE GOODYEAR TIRE & RUBBER
COMPANY
Akron,
Ohio 44316-0001 (US)**

(72) Inventors:
• **Weydert, Marc**
**L-8028, Strassen (LU)**
• **Reiter, Leonard James**
**44203, Norton (US)**
• **Crawford, Michael Julian**
**44303, Akron (US)**

(74) Representative: **Kutsch, Bernd**
**Goodyear S.A.,
Patent Department,
Avenue Gordon Smith
7750 Colmar-Berg (LU)**

(54) **Tire with silica reinforced tread containing a high vinyl styrene/butadiene elastomer and a blocked alkoxyorganomercaptosilane**

(57)　The invention relates to a tire having a tread of a rubber composition containing a specialized high vinyl styrene/butadiene copolymer elastomer which contains reinforcing filler as a combination of rubber reinforcing carbon black and synthetic amorphous precipitated silica together with a coupling agent for said precipitated silica as an alkoxyorganomercaposilane having its mercapto moiety blocked which becomes unblocked to enable the mercapto moiety to interact with the specialized high vinyl styrene/butadiene copolymer elastomer. The tread rubber composition may optionally additionally contain an alkylsilane and/or starch/plasticizer composite.

**Description**

Field of the Invention

The invention relates to a tire having a tread of a rubber composition containing a specialized high vinyl styrene/ butadiene copolymer elastomer which contains reinforcing filler as a combination of rubber reinforcing carbon black and synthetic amorphous precipitated silica together with a coupling agent for said precipitated silica as an alkoxyorganomercaposilane having its mercapto moiety blocked which becomes unblocked to enable the mercapto moiety to interact with the specialized high vinyl styrene/butadiene copolymer elastomer. The tread rubber composition may optionally additionally contain an alkylsilane and/or starch/plasticizer composite.

Background of the Invention

Tires are typically prepared with treads containing combinations of various elastomers which may be, for example, a combination of cis 1,4-polybutadiene rubber and styrene/butadiene copolymer rubber, and may also contain a minor amount of one or more additional elastomers.

Such tire tread rubber compositions contain particulate reinforcing fillers such as, for example, rubber reinforcing carbon black and may also contain synthetic amorphous silica reinforcement.

Preparation of a specialized high vinyl styrene/butadiene rubbery polymer for use in tire treads is disclosed US-A- 6,566,478 which is prepared with a stylized polymerization initiator and for which the rubbery composition may contain carbon black and/or silica reinforcement together with a coupling agent for the silica. The specialized high vinyl styrene/butadiene rubbery polymer is reported as having a degree of branching. Various rubber compositions, including silica reinforced rubber compositions, which contain the rubber polymer are mentioned, including use thereof for tire tread formulations.

In particular, high vinyl diene rubbery polymers are mentioned therein as being comprised of at least 50 percent repeat units of a vinyl microstructure based upon the total number of polydiene repeat units in the rubber polymer, a weight average molecular weight (Mw) of at least 300,000 (e.g. a range of from 350,000 to 2,000,000), a monomodal a polydispersity (Mn/Mw) of at least 1.2 (e.g. of at least 1.4) and a ratio of radius of gyration to weight average molecular weight (Mw) of greater than 0.078 mm.mol/kg (e.g. greater than 0.082 mm.mol/kg) which is apparently an indication of the branching level.

Exemplary styrene/butadiene polymers are reported therein as having

(A) a Mn (number average molecular weight) of 380,100 and a Mw of 545,300, a polydispersity (Mw/Mn) of 1.4, radii of gyration of 40.3 (Rn in units of nm) and 45.9 (Rw in units of nm) and a branching level of 0.084 (Rw/Mw in units of mm.mol/kg), and
(B) a Mn (number average molecular weight) of 465,000 and a Mw of 809,100, a polydispersity (Mw/Mn) of 1.7, radii of gyration of 45.4 (Rn in units of nm) and 53.2 (Rw in units of nm) and a branching level of 0.066 (Rw/Mw in units of mm.mol/kg).

For this invention, the use of the specialized high vinyl styrene/butadiene rubber is envisioned in a tire tread rubber composition containing reinforcing filler composed of both rubber reinforcing carbon black and synthetic precipitated silica aggregates together with a coupling agent, which may be introduced as a blocked alkoxyorganomercaptosilane, and which may contain an alkylsilane and/or starch/plasticizer composite.

In the description of the invention, the term "phr" relates to parts by weight of a particular ingredient per 100 parts by weight of rubber contained in a rubber composition.

The terms "rubber" and "elastomer" are used interchangeably unless otherwise indicated, the terms "cure" and vulcanize" may be used interchangeably unless otherwise indicated and the terms "rubber compound" and "rubber composition" may be used interchangeably unless otherwise indicated.

Summary of the Invention

In accordance with this invention, a tire is provided having a tread of a rubber composition comprising, based upon 100 parts by weight of elastomer (phr),

(A) 100 phr of diene-based elastomers comprising:

(1) 30 to 90 phr of a specialized high vinyl styrene/butadiene copolymer elastomer having a bound styrene content in a range of from 26 to 30 percent and having a microstructure comprised of 56 to 60 percent vinyl 1,2-isomeric repeat units based upon the polybutadiene component of the styrene/butadiene copolymer elastomer, wherein said styrene/butadiene copolymer elastomer has a weight average molecular weight (Mw) of at least 300,000, and a monomodal polydispersity [ratio of weight average molecular weight (Mw) to number average molecular weight (Mn), or Mw/Mn] of at least 1.2/1 (in practice, said styrene/butadiene copolymer elastomer may be desired to have a ratio of radius of gyration to weight average molecular weight of greater than 0.078 mm.mol/kg);

(2) 10 to 70 phr of at least one additional diene-basedelastomer (other than said specialized high vinyl styrene/butadiene elastomer) selected from at least one of polymers of at least one of isoprene and 1,3-butadiene and copolymers of styrene and at least one of isoprene and 1,3-butadiene; and

(B) 35 to 120, alternately 60 to 110, phr of a reinforcing filler comprising:

(1) 30 to 90, alternately 50 to 80, phr of synthetic amorphous precipitated silica aggregates which contain hydroxyl groups (e.g. silanol groups), and
(2) 5 to 30, alternately 10 to 30, phr of rubber reinforcingcarbon black, and

(C) coupling agent for said precipitated silica as:

(1) a blocked alkoxyorganomercaptosilane of the general formula (II):

$$(X_3Si)_n - G - S - C(=O) - Y \qquad (II)$$

wherein Y is independently selected from hydrogen, and straight, cyclic or branched alkyl radicals containing from 1 to 18 carbon atoms and which may or may not contain unsaturation, alkenyl groups, aryl groups, aralkyl groups;
wherein G is independently selected from divalent groups derived from substitution of alkyl, alkenyl, aryl or aralkyl group(s) wherein G can contain from 1 to 18 carbon atoms, provided however that G is not such that said alkoxyorganomercaptosilane contains an alpha-, or beta-unsaturated carbonyl including a carbon-to-carbon double bond next to the thiocarbonyl group;
wherein X is independently selected from the group consisting of -Cl, -GR, RO- , RC(=O)- , $R_2$C=NO—, $R_2$NO—, or $R_2$N—, -R, —(OSiR$_2$), and (OSiR$_3$), wherein R is selected from hydrogen, from saturated straight chain, cyclic and branched alkyl radicals containing from 1 to 18 carbon atoms, from unsaturated straight chain, cyclic and branched alkyl radicals containing from 2 to 18 carbon atoms, and from alkenyl groups, aryl groups and aralkyl groups; wherein G is as above and wherein at least one X is not an -R radical; and where n is 1; or
(2) a blocked alkoxyorganomercaptosilane selected from, for example, 2-triethoxysilyl-1-ethyl thioacetate; 2-trimethoxysilyl-1-ethyl thioacetate; 2-(methyldimethoxysilyl)-1-ethyl thioacetate; 3-trimethoxysilyl-1-propyl thioacetate; triethoxysilylmethyl thioacetate; trimethoxysilylmethyl thioacetate; triisopropoxysilylmethyl thioacetate; methyldiethoxysilylmethyl thioacetate; methyldimethoxysilylmethyl thioacetate; methyldiisopropoxysilylmethyl thioacetate; dimethylethoxysilylmethyl thioacetate; dimethylmethoxysilylmethyl thioacetate; dimethylisopropoxysilylmethyl thioacetate; 2-triisopropoxysilyl-1-ethyl thioacetate; 2-(methyldiethoxysilyl)-1-ethyl thioacetate; 2-(methyldiisopropoxysilyl)-1-ethyl thioacetate; 2-(dimethylethoxysilyl)-1-ethyl thioacetate; 2-(dimethylmethoxysilyl)-1-ethyl thioacetate; 2-(dimethylisopropoxysilyl)-1-ethyl thioacetate; 3-triethoxysilyl-1-propyl thioacetate; 3-triisopropoxysilyl-1-propyl thioacetate; 3-methyldiethoxysilyl-1-propyl thioacetate; 3-methyldimethoxysilyl-1-propyl thioacetate; 3-methyldiisopropoxysilyl-1-propyl thioacetate; 1-(2-triethoxysilyl-1-ethyl)-4-thioacetylcyclohexane; 1-(2-triethoxysilyl-1-ethyl)-3-thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxysilyl-1-ethyl)-4-thioacetylnorbomene; 1-(1-oxo-2-thia-5-triethoxysilylpenyl)benzoic acid; 6-triethoxysilyl-1-hexyl thioacetate; 1-triethoxysilyl-5-hexyl thioacetate; 8-triethoxysilyl-1-octyl thioacetate; 1-triethoxysilyl-7-octyl thioacetate; 6-triethoxysilyl-1-hexyl thioacetate; 1-triethoxysilyl-5-octyl thioacetate; 8-trimethoxysilyl-1-octyl thioacetate; 1-trimethoxysilyl-7-octyl thioacetate; 10-triethoxysilyl-1-decyl thioacetate; 1-triethoxysilyl-9-decyl thioacetate; 1-triethoxysilyl-2-butyl thioacetate; 1-triethoxysilyl-3-butyl thioacetate; 1-triethoxysilyl-3-methyl-2-butyl thioacetate; 1-triethoxysilyl-3-methyl-3-butyl thioacetate; 3-trimethoxysilyl-1-propyl thiooctoate; 3-triethoxysilyl-1-propyl thiopalmitate; 3-triethoxysilyl-1-propyl thiooctoate; 3-triethoxysilyl-1-propyl thiobenzoate; 3-triethoxysilyl-1-propyl thio-2-ethylhexanoate; 3-methyldiacetoxysilyl-1-propyl thioacetate; 3-triacetoxysilyl-1-propyl thioacetate; 2-methyldiacetoxysilyl-1-ethyl thioacetate; 2-triacetoxysilyl-1-ethyl thioacetate; 1-methyldiacetoxysilyl-1-ethyl thioacetate; 1-triacetoxysilyl-1-ethyl thioacetate; 3-ethoxydidodecyloxy-1-propyl thioacetate; 3-ethoxyditetradecyloxy-1-propyl thioacetate; 3-ethoxydidodecyloxy-1-propyl-thiooctoate and 3-ethoxyditetradecyloxy-1-propyl-thiooctoate.

The tire is cured (sulfur cured) at an elevated temperature (e.g. from 140°C to 170°C). The blocked mercapto moiety of said alkoxyorganomercaptosilane becomes unblocked at the elevated temperature to enable the unblocked mercapto moiety to interact with said high vinyl styrene/butadiene copolymer rubber.

In one aspect, said tire tread rubber composition optionally additionally contains at least one of:

(A) 2 to 20, alternately from 2 to 10, phr of a starch/plasticizer composite comprised of starch and plasticizer therefor of a weight ratio thereof in a range of 0.5/1 to 5/1, wherein said starch/plasticizer composite has a softening point in a range of from 110°C to 170°C; and

(B) 1 to 12, alternately from 1 to 9, phr of an alkylsilane of the general formula (I):

$$X_n - Si - R^1_{4-n} \qquad (I)$$

wherein $R^1$ is an alkyl radical having from 1 to 18 carbon atoms, preferably from 1 through 4 carbon atoms; n is a value ranging from 1 through 3; X is a radical selected from the group consisting of halogen, preferably chlorine, and alkoxy radicals, wherein said alkoxy radicals are selected from methoxy and ethoxy, preferably ethoxy, radicals.

The tire of this invention may be prepared, for example, by a process which comprises:

(A) mixing a mixture comprised of said high vinyl styrene/butadiene copolymer elastomer, and optionally at least one of said additional diene-based elastomers, and said reinforcing filler in at least one sequential mixing step in an internal rubber mixer to a temperature in a range of from 140°C to 175°C in the absence of free addition of sulfur;

(B) thereafter, (which may be included in the above or subsequent sequential mixing step), mixing therewith said blocked alkoxyorganomercaptosilane to a temperature in a range of from 140°C to 175°C;

(C) thereafter, in a subsequent mixing step, mixing therewith free sulfur and east one organic sulfur vulcanization accelerator to a temperature in a range of from 95°C to 120°C;

wherein said rubber mixtures may be normally be allowed to cool to a temperature, for example, below 40°C between said mixing steps;

(D) shaping the resulting mixture of step (C) to form a shaped unvulcanized rubber tire tread strip and building a tire which contains said unvulcanized tread strip to form a tire assembly thereof followed by sulfur vulcanizing said tire assembly in a in a suitable mold at an elevated temperature in a range of from 140°C to about 180°C to form the tire of this invention.

It is to be appreciated that the chemical activity of the mercapto group, or moiety, of said blocked alkoxyorganomercaptosilane is substantially blocked from interacting with said diene-based elastomer until said unblocking agent is mixed therewith and allowed to subsequently unblock said blocked mercapto group of said blocked alkoxyorganomercaptosilane substantially at said elevated vulcanization temperature and thereby enable the unblocked mercapto group to interact with said diene-based elastomer) substantially subsequent to said mixing thereof.

In practice, it is considered herein that the chemical activity of the mercapto group of said alkoxyorganomercaptosilane is substantially blocked from interacting with said diene-based elastomer until said the rubber composition is heated to an elevated temperature (e.g. at least 140°C) wherein the mercapto group becomes unblocked to thereby enable the unblocked mercapto group to interact with the diene-based elastomer in the rubber composition. An unblocking agent may be mixed therewith to aid in the unblocking of the blocked mercapto group.

In the practice of this invention, for said blocked alkoxyorganomercaptosilane, X is preferably $R_2O$—.

In the practice of this invention, an unblocking agent, if used, may be selected from, for example, at least one of N,N'-diphenylguanidine and N,N'-di-ortho-tolylguanidine.

It is to be appreciated that the said unblocking agent, if used, is a material capable of unblocking the blocked alkoxyorganomercaptosilane to enable the mercapto group, or moiety, of the alkoxyorganomercaptosilane to interact with the diene based elastomer(s). It is to be appreciated that choice of the unblocking agent will depend upon the blocking group, or moiety, used to block the chemical activity of the alkoxyorganomercaptosilane itself insofar as interacting with a diene-based elastomer is concerned, which would be readily understood by one having skill in such art.

In further accordance with this invention, a rubber composition, particularly for a tire tread, is provided which is prepared by the said process of this invention.

For the blocked alkoxyorganomercaptosilane coupling agent, it is generally preferred that $R_1$ has a primary

carbon attached to the carbonyl as an alkyl group which contains from 2 to 12, preferably from 6 through 8, carbon atoms; and where G is a divalent hydrocarbon radical.

For the blocked alkoxyorganomercaptosilane coupling agent, representative examples of G are, for example, - (CH$_2$)$_n$ — radicals where n is a value of from 1 to 12, diethylene cyclohexane, 1,2,4-triethylene cyclohexane, and diethylene benzene radicals. In practice, it is preferred that the sum of the carbon atoms within the G and Y groups is from 4 to 24, more preferably from 6 to 18. It is considered herein that such amount of carbon atoms in the blocked alkoxyorganomercaptosilane may aid in facilitating the dispersion of the composite of pre-reacted silica into the diene-based elastomer(s), whereby it is envisioned that a balance of physical of properties in the cured reinforced elastomer(s) is improved.

In practice, the R group of the blocked alkoxyorganomercaptosilane is preferably selected from hydrogen atom and saturated alkyl groups having from 1 through 18 carbon atoms wherein, alternately said R groups are methyl groups or wherein, alternately one or two of said R groups is a methyl group and the remainder of said R groups are saturated alkyl groups having from 3 through 18 carbon atoms.

Representative examples of X are, for example, methoxy, ethoxy, isobutoxy, propoxy, isopropoxy, acetoxy and oximato groups. Preferably, X is selected from methoxy, acetoxy and ethoxy groups. In practice, at least one X must be reactive (i.e., hydrolyzable).

In practice, for preferred blocked alkoxyorganomercaptosilanes, Y is phenyl, cyclohexyl, or straight chain or substituted straight chain alkyl radical having from 3 to 18 carbon atoms. For a more preferred blocked alkoxyorganomercaptosilane, Y is a straight chain or substituted strait chain alkyl radical having from 6 to 18 carbon atoms.

An exemplary amount of the unblocking agent, if used, may be, for example, 0.1 to 5 phr; alternately in a range of from 0.5 to 3 phr, depending somewhat upon the nature of the blocked alkoxyorganomercaptosilane, the unblocking agent and the mercapto coupling activity desired with the respective specialized elastomer.

The unblocking agent, if used, is typically mixed with the rubber mixture subsequent to the preparation of the composite of amorphous precipitated silica and may be added together with the sulfur curative in the final curative addition mixing stage.

Examples of unblocking agents, if used, include, for example, the hereinbefore referenced N, N'-diphenylguanidine, N, N'-di-ortho-tolylguanidine as well as, for example, hexamethylenetetramine and 4,4'-diaminodiphenylmethane.

Various methods of preparation of various blocked alkoxyorganomercaptosilanes are reported, for example, in the aforesaid PCT/US98/17391 and US-A- 3,692,812 as well as in various literature publications such as, for example, in Gornowicz, G., "Preparation of Silylalkanethiols", J. Org. Chem., Volume 33, No. 7, July, 1968; Vorkonov, M. G., et al., Trialkoxysilylalkanethiols and Bis(trialkoxysilylakyl)sulfides, Izvestiya Akademii Nauk SSSR and Seriya Khimicheskeya, No. 8, Pages 1849 through 1851, August 1977.

In the practice of this invention, representative alkylsilanes of said Formula (I) are, for example, trichloromethylsilane, dichlorodimethylsilane, chlorotrimethylsilane, trimethoxymethylsilane, dimethoxydimethylsilane, methoxytrimethylsilane, trimethoxypropylsilane, trimethoxyoctylsilane, trimethoxyhexadecylsilane, dimethoxydipropylsilane, triethoxymethylsilane and diethoxydimethylsilane.

Particularly representative alkylsilanes are dichlorodimethylsilane, chlorotrimethylsilane and hexamethyldisilazane.

The said specialized high vinyl styrene/butadiene copolymer elastomer may be prepared, for example, by the polymerization reported in said US-A-6,566,478.

In one aspect of the invention, the precipitated silica may, prior to blending with said elastomer(s), be:

(A) pre-treated with an with said alkylsilane of the general Formula (I) prior to blending with said elastomer(s) and said coupling agent;
(B) pre-treated with a blocked alkoxyorganomercaptosilane coupling agent of formula (II); or
(C) pre-treated with a combination of said alkylsilane of Formula (I) and said blocked alkoxyorganomercaptosilane coupling agent.

In practice of the invention, various other (additional) diene-based elastomers (other than and in addition to said specialized high vinyl styrene/butadiene copolymer elastomer) may be used for tire tread rubber composition.

Such additional diene based elastomers may be, for example, homopolymers and copolymers of conjugated dienes such as for example isoprene and 1,3-butadiene and copolymers of such dienes with a vinyl aromatic compound such as styrene or alphamethyl styrene, preferably styrene.

Representative of such additional elastomers are, for example, cis 1,4-polyisoprene rubber (natural and synthetic), cis 1,4-polybutadiene rubber, styrene/butadiene copolymer rubber (prepared by aqueous emulsion of organic solvent polymerization and other than said elastomers contained in said SBR Composite), styrene/isoprene/butadiene terpolymer rubber, butadiene/acrylonitrile rubber, 3,4-polyisoprene rubber and isoprene/butadiene copolymer rubber.

In practice, the rubber composition may contain a tin coupled diene-based elastomer prepared by organic solvent polymerization in the presence of a suitable tin-based catalyst complex of at least one of isoprene and 1,3-butadiene monomers or of styrene together with at least one of isoprene and 1,3-butadiene monomers. Said tin coupled elastomers may be selected from, for example, styrene/butadiene copolymers, isoprene/butadiene copolymers, styrene/isoprene copolymers and styrene/isoprene/butadiene terpolymers. The preparation of tin coupled elastomers by organic solvent polymerization is well known to those having skill in such art.

The said optional starch/plasticizer composite is a particulate composite of starch and plasticizer therefor. Such starch may be comprised of amylose units and amylopectin units in a ratio of, for example, 10/90 to 35/65, alternatively 20/80 to 30/70, and has a softening point according to ASTM No. D1228 in a range of about 180°C to 220°C; and the starch/plasticizer composite itself having a softening point in a range of 110°C to 170°C according to ASTM No. D1228.

In practice, the starch/plasticizer composite is desirably a free flowing, dry powder or in a free flowing, dry pelletized form. In practice, it is desired that the synthetic plasticizer itself is compatible with the starch, and has a softening point lower than the softening point of the starch so that it causes the softening of the blend of the plasticizer and the starch to be lower than that of the starch alone.

For the purposes of this invention, the plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

In general, the starch/plasticizer composite has a desired starch to plasticizer weight ratio in a range of 0.5/1 to 4/1, alternatively 1/1 to 2/1, so long as the starch/plasticizer composition has the required softening point range, and preferably, is capable of being a free flowing, dry powder or extruded pellets, before it is mixed with the elastomer(s).

The synthetic plasticizer(s) may be of a viscous nature at room temperature, or at 23°C and, thus, considered to be a liquid for the purposes of this description, although the plasticizer may actually be in a form of a viscous liquid at room temperature since it is to be appreciated that many plasticizers are polymeric in nature.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate and more preferably a poly(ethylenevinyl alcohol which may have, for example, a vinylalcohol/ethylene mole ratio of 60/40 and a molecular weight, for example, of 11700 with an average particle size of, for example, 11.5 microns or a molecular weight (weight average) of, for example, 60,000 with an average particle diameter of, for example, less than 50 microns.

Various blends of starch and ethylenevinyl alcohol copolymers can then be prepared according to mixing procedures well known to those having skill in such art.

Other plasticizers might be used, for example and so long as they have the appropriate Tg and starch compatibility requirements, by reacting one or more appropriate organic dibasic acids with aliphatic or aromatic diol(s) in a reaction which might sometimes be referred to as an esterification condensation reaction. Such esterification reactions are well known to those skilled in such art.

It is readily understood by those having skill in the art that the rubber composition of the tire component for this invention would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

In one embodiment of the invention a tire is envisioned as being prepared according to this invention, having a tread with a running surface of a rubber composition of this invention. The tire can be built, shaped, molded and cured by various methods which will be readily apparent to those having skill in such art.

**Claims**

1. A tire having a tread of a rubber composition comprising, based upon 100 parts by weight of elastomer (phr),

(A) 100 phr of diene-based elastomers comprising:

(1) from 30 to 90 phr of a specialized highvinylstyrene/butadiene copolymer elastomer having a bound styrene content in a range of from 26 to 30 percent and having a microstructure comprising 56 to 60 percent vinyl 1,2-isomeric repeat units based upon the polybutadiene component of the styrene/butadiene copolymer elastomer, wherein said styrene/butadiene copolymer elastomer has a weight average molecular weight (Mw) of at least 300,000, and a monomodal polydispersity (Mw/Mn) of at least 1.2/1;

(2) from 10 to 70 phr of at least one additional diene-based elastomer selected from at least one of polymers of at least one of isoprene and 1,3-butadiene and copolymers of styrene and at least one of isoprene and 1,3-butadiene; and

(B) from 35 to 120 phr of a reinforcing filler comprising:

(1) from 30 to 90 phr of synthetic amorphous precipitated silica aggregates which contain hydroxyl groups, and

(2) from 5 to 30 phr of rubber reinforcing carbon black, and

(C) coupling agent for said precipitated silica as:

(1) a blocked alkoxyorganomercaptosilane of the general formula (II):

$$(X_3Si)_n - G - S - C(=0) - Y \qquad (II)$$

wherein Y is independently selected from hydrogen, and straight, cyclic or branched alkyl radicals containing from 1 to 18 carbon atoms which may or may not contain unsaturation, alkenyl groups, aryl groups, aralkyl groups;

wherein G is independently selected from divalent groups derived from substitution of alkyl, alkenyl, aryl or aralkyl group(s) wherein G can contain from 1 to 18 carbon atoms, provided however that G is not such that said alkoxyorganomercaptosilane contains an alpha-, or beta-unsaturated carbonyl including a carbon-to-carbon double bond next to the thiocarbonyl group;

wherein X is independently selected from the group consisting of —Cl, -GR, RO- , RC(=O)- , $R_2C=NO$— , $R_2NO$—, or $R_2N$—, -R, —$(OSiR_2)$, and $(OSiR_3)$, wherein R is selected from hydrogen, from saturated straight chain, cyclic and branched alkyl radicals containing from 1 to 18 carbon atoms, from unsaturated straight chain, cyclic and branched alkyl radicals containing from 2 to 18 carbon atoms, and from alkenyl groups, aryl groups and aralkyl groups; wherein G is as above and wherein at least one X is not an -R radical; and wherein n is 1; or

(2) a blocked alkoxyorganomercaptosilane selectedfrom2-triethoxysilyl-1-ethyl thioacetate; 2-trimethoxysilyl-1-ethyl thioacetate; 2-(methyldimethoxysilyl)-1-ethyl thioacetate; 3-trimethoxysilyl-1-propyl thioacetate; triethoxysilylmethyl thioacetate; trimethoxysilylmethyl thioacetate; triisopropoxysilylmethyl thioacetate; methyldiethoxysilylmethyl thioacetate; methyldimethoxysilylmethyl thioacetate; methyldiisopropoxysilylmethyl thioacetate; dimethylethoxysilylmethyl thioacetate; dimethylmethoxysilylmethyl thioacetate; dimethylisopropoxysilylmethyl thioacetate; 2-triisopropoxysilyl-1-ethyl thioacetate; 2-(methyldiethoxysilyl)-1-ethyl thioacetate; 2-(methyldiisopropoxysilyl)-1-ethyl thioacetate; 2-(dimethylethoxysilyl)-1-ethyl thioacetate; 2-(dimethylmethoxysilyl)-1-ethyl thioacetate; 2-(dimethylisopropoxysilyl)-1-ethyl thioacetate; 3-triethoxysilyl-1-propyl thioacetate; 3-triisopropoxysilyl-1-propyl thioacetate; 3-methyldiethoxysilyl-1-propyl thioacetate; 3-methyldimethoxysilyl-1-propyl thioacetate; 3-methyldiisopropoxysilyl-1-propyl thioacetate; 1-(2-triethoxysilyl-1-ethyl)-4-thioacetylcyclohexane; 1-(2-triethoxysilyl-1-ethyl)-3-thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxysilyl-1-ethyl)-4-thioacetylnorbornene; 1-(1-oxo-2-thia-5-triethoxysilylpenyl)benzoic acid; 6-triethoxysilyl-1-hexyl thioacetate; 1-triethoxysilyl-5-hexyl thioacetate; 8-triethoxysilyl-1-octyl thioacetate; 1-triethoxysilyl-7-octyl thioacetate; 6-triethoxysilyl-1-hexyl thioacetate; 1-triethoxysilyl-5-octyl thioacetate; 8-trimethoxysilyl-1-octyl thioacetate; 1-trimethoxysilyl-7-octyl thioacetate; 10-triethoxysilyl-1-decyl thioacetate; 1-triethoxysilyl-9-decyl thioacetate; 1-triethoxysilyl-2-butyl thioacetate; 1-triethoxysilyl-3-butyl thioacetate; 1-triethoxysilyl-3-methyl-2-butyl thioacetate; 1-triethoxysilyl-3-methyl-3-butyl thioacetate; 3-trimethoxysilyl-1-propyl thiooctoate; 3-triethoxysilyl-1-propyl thiopalmitate; 3-triethoxysilyl-1-propyl thiooctoate; 3-triethoxysilyl-1-propyl thiobenzoate; 3-triethoxysilyl-1-propyl thio-2-ethylhexanoate; 3-methyldiacetoxysilyl-1-propyl thioacetate; 3-triacetoxysilyl-1-propyl thioacetate; 2-methyldiacetoxysilyl-1-ethyl thioacetate; 2-triacetoxysilyl-1-ethyl thioacetate; 1-methyldiacetoxysilyl-1-ethyl thioacetate; 1-triacetoxysilyl-1-ethyl thioacetate; 3-ethoxydidodecyloxy-1-propyl thioacetate; 3-ethoxyditetradecyloxy-1-propyl thioacetate; 3-ethoxydidodecyloxy-1-propyl-thiooctoate and 3-ethoxyditetradecyloxy-1-propyl-thiooctoate.

2. The tire of claim 1, wherein said blocked alkoxyorganomercaptosilane is selected from 2-(methyldimethoxysilyl)-1-ethyl thioacetate; 3-trimethoxysilyl-1-propyl thioacetate; triethoxysilylmethyl thioacetate; trimethoxysilylmethyl thioacetate; triisopropoxysilylmethyl thioacetate; methyldiethoxysilylmethyl thioacetate; methyldimethoxysilylmethyl thioacetate; methyldiisopropoxysilylmethyl thioacetate; dimethylethoxysilylmethyl thioacetate; dimethylmethoxysilylmethyl thioacetate; dimethylisopropoxysilylmethyl thioacetate; 2-triisopropoxysilyl-1-ethyl thioacetate; 2-(methyldiethoxysilyl)-1-ethyl thioacetate; 2-(methyldiisopropoxysilyl)-1-ethyl thioacetate; 2-(dimethylethoxysilyl)-1-ethyl thioacetate; 2-(dimethylmethoxysilyl)-1-ethyl thioacetate; 2-(dimethylisopropoxysilyl)-1-ethyl thioacetate; 3-triethoxysilyl-1-propyl thioacetate; 3-triisopropoxysilyl-1-propyl thioacetate; 3-methyldiethoxysilyl-1-propyl thioacetate; 3-methyldimethoxysilyl-1-propyl thioacetate; 3-methyldiisopropoxysilyl-1-propyl thioacetate; 1-(2-triethoxysilyl-1-ethyl)-4-thioacetylcyclohexane; 1-(2-triethoxysilyl-1-ethyl)-3-thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxysilyl-1-ethyl)-4-thioacetylnorbornene; 1-(1-oxo-2-thia-5-triethoxysilylpenyl)benzoic acid; 6-triethoxysilyl-1-hexyl thioacetate; 1-triethoxysilyl-5-hexyl thioacetate; 8-triethoxysilyl-1-octyl thioacetate; 1-triethoxysilyl-7-octyl thioacetate; 6-triethoxysilyl-1-hexyl thioacetate; 1-triethoxysilyl-5-octyl thioacetate; 8-trimethoxysilyl-1-octyl thioacetate; 1-trimethoxysilyl-7-octyl thioacetate; 10-triethoxysilyl-1-decyl thioacetate; 1-triethoxysilyl-9-decyl thioacetate; 1-triethoxysilyl-2-butyl thioacetate; 1-triethoxysilyl-3-butyl thioacetate; 1-triethoxysilyl-3-methyl-2-butyl thioacetate; 1-triethoxysilyl-3-methyl-3-butyl thioacetate; 3-trimethoxysilyl-1-propyl thiooctoate; 3-triethoxysilyl-1-propyl thiopalmitate; 3-triethoxysilyl-1-propyl thiooctoate; 3-triethoxysilyl-1-propyl thiobenzoate; 3-triethoxysilyl-1-propyl thio-2-ethylhexanoate; 3-methyldiacetoxysilyl-1-propyl thioacetate; 3-triacetoxysilyl-1-propyl thioacetate; 2-methyldiacetoxysilyl-1-ethyl thioacetate; 2-triacetoxysilyl-1-ethyl thioacetate; 1-methyldiacetoxysilyl-1-ethyl thioacetate; 1-triacetoxysilyl-1-ethyl thioacetate; 3-ethoxydidodecyloxy-1-propyl thioacetate; 3-ethoxyditetradecyloxy-1-propyl thioacetate; 3-ethoxydidodecyloxy-1-propyl-thiooctoate and 3-ethoxyditetradecyloxy-1-propyl-thiooctoate.

3. The tire of claim 1 or 2, wherein the tread rubber composition additionally contains at least one of:

(A) from 2 to 20 phr of a starch/plasticizer composite comprised of starch and plasticizer therefor of a weight ratio thereof in a range of 0.5/1 to 5/1, wherein said starch/plasticizer composite has a softening point in a range of from 110°C to 170°C and
(B) from 1 to 12 phr of an alkylsilane of the general formula (I):

$$X_n - Si - R^1_{4-n} \qquad (I)$$

wherein $R^1$ is an alkyl radical having from 1 to 18 carbon atoms, preferably from 1 through 4 carbon atoms; n is a value ranging from 1 through 3; X is a radical selected from the group consisting of halogen, preferably chlorine, and alkoxy radicals, wherein said alkoxy radicals are selected from methoxy and ethoxy, preferably ethoxy, radicals.

4. The tire of at least one of the previous claims, wherein said tread rubber composition additionally contains 2 to 20 phr of a starch/plasticizer composite comprised of starch and plasticizer therefor of a weight ratio thereof in a range of 0.5/1 to 5/1, wherein said starch/plasticizer composite has a softening point in a range of from 110°C to 170°C.

5. The tire of at least one of the previous claims, wherein said tread rubber composition additionally contains 1 to 12 phr of an alkylsilane selected from trichloromethylsilane, dichlorodimethylsilane, chlorotrimethylsilane, trimethoxymethylsilane, dimethoxydimethylsilane, methoxytrimethylsilane, trimethoxypropylsilane, trimethoxyoctylsilane, trimethoxyhexadecylsilane, dimethoxydipropylsilane, triethoxymethylsilane or diethoxydimethylsilane.

6. The tire of any of the preceding claims sulfur cured at an elevated temperature of from 140°C to 170°C.

7. The tire of at least one of the previous claims, wherein the tire is prepared by a process which comprises:

(A) mixing a mixture comprised of said high vinyl styrene/butadiene copolymer elastomer, and optionally at least one of said additional diene-based elastomers, and said reinforcing filler in at least one sequential mixing step in an internal rubber mixer to a temperature in a range of from 140°C to 175°C in the absence of free addition of sulfur;

(B) thereafter, which may be included in the above or subsequent sequential mixing step, mixing therewith said blocked alkoxyorganomercaptosilane to a temperature in a range of from 140°C to 175°C;

(C) thereafter, in a subsequent mixing step, mixing therewith free sulfur and east one organic sulfur vulcanization accelerator to a temperature in a range of from 95°C to 120°C;

wherein said rubber mixtures are allowed to cool to a temperature below 40°C between said mixing steps;

(D) shaping the resulting mixture of step (C) to form a shaped unvulcanized rubber tire tread strip and building a tire which contains said unvulcanized tread strip to form a tire assembly thereof followed by sulfur vulcanizing said tire assembly in a in a suitable mold at an elevated temperature in a range of from 140°C to 180°C.

**European Patent Office**

**EUROPEAN SEARCH REPORT**

Application Number

EP 05 10 7858

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | US 2002/055568 A1 (CRUSE RICHARD W ET AL) 9 May 2002 (2002-05-09) * abstract; claims; examples 12,13,15 * * paragraph [0066] - paragraph [0088] * ----- | 1-7 | B60C1/00 C08L9/06 C08L21/00 |
| Y,D | US 6 566 478 B1 (HENNING STEVEN KRISTOFER ET AL) 20 May 2003 (2003-05-20) * abstract; claims * * column 6, line 28 - line 38 * * column 10, line 22 - column 14, line 30 * * column 21, line 15 - line 29 * ----- | 1-7 | |
| Y | EP 1 431 075 A (THE GOODYEAR TIRE & RUBBER COMPANY) 23 June 2004 (2004-06-23) * abstract; claims; examples; table 1 * ----- | 3,4 | |
| Y | US 6 433 065 B1 (LIN CHEN-CHY ET AL) 13 August 2002 (2002-08-13) * abstract; claims; table 3 * ----- | 3,5 | |

TECHNICAL FIELDS SEARCHED (Int.Cl.7)

C08L

The present search report has been drawn up for all claims

| Place of search | Date of completion of the search | Examiner |
|---|---|---|
| The Hague | 7 November 2005 | Mettler, R-M |

EPO FORM 1503 03.82 (P04C01)

**ANNEX TO THE EUROPEAN SEARCH REPORT
ON EUROPEAN PATENT APPLICATION NO.** EP 05 10 7858

This annex lists the patent family members relating to the patent documents cited in  the above-mentioned European search report.
The members are as contained in the European Patent Office EDP file on
The European Patent Office is in no way liable for these particulars which are merely given for the purpose of information.

07-11-2005

| Patent document cited in search report | | Publication date | Patent family member(s) | | Publication date |
|---|---|---|---|---|---|
| US 2002055568 | A1 | 09-05-2002 | US | 6414061 B1 | 02-07-2002 |
| | | | US | 2002099118 A1 | 25-07-2002 |
| | | | US | 2002055646 A1 | 09-05-2002 |
| | | | US | 2002055564 A1 | 09-05-2002 |
| US 6566478 | B1 | 20-05-2003 | BR | 0301032 A | 17-08-2004 |
| | | | EP | 1359165 A1 | 05-11-2003 |
| | | | JP | 2003321510 A | 14-11-2003 |
| EP 1431075 | A | 23-06-2004 | US | 2004122134 A1 | 24-06-2004 |
| US 6433065 | B1 | 13-08-2002 | DE | 60112600 D1 | 15-09-2005 |
| | | | EP | 1326913 A2 | 16-07-2003 |
| | | | JP | 2004511600 T | 15-04-2004 |
| | | | WO | 0231040 A2 | 18-04-2002 |

EPO FORM P0459

For more details about this annex : see Official Journal of the European Patent Office, No. 12/82